**Europäisches Patentamt**

**European Patent Office**

**Office européen des brevets**

(11) Numéro de publication : **0 456 537 A1**

(19)

(12) # DEMANDE DE BREVET EUROPEEN

(21) Numéro de dépôt : **91401007.9**

(22) Date de dépôt : **16.04.91**

(51) Int. Cl.⁵ : **F16L 3/01**, F16G 13/16

(30) Priorité : **02.05.90 FR 9005546**

(43) Date de publication de la demande :
**13.11.91 Bulletin 91/46**

(84) Etats contractants désignés :
**BE DE ES GB IT NL**

(71) Demandeur : **KABELSCHLEPP FRANCE**
**Rue du Chemin Vert, Zone Industrielle**
**F-78610 Le Perray En Yvelines (FR)**

(72) Inventeur : **Worms, Jean-Jack**
**18, avenue Sainte Marie**
**F-94160 Saint-Mande (FR)**

(74) Mandataire : **Plaçais, Jean-Yves et al**
**Cabinet Netter, 40, rue Vignon**
**F-75009 Paris (FR)**

(54) **Perfectionnement aux dispositifs porte-câbles.**

㊗    Un dispositif porte-câbles comprend une série de segments (3) du genre pièces de forme articulées à rotation à débattement limité avec des pièces homologues de segments adjacents, certains au moins des segments logeant intérieurement des organes porte-câbles.

Les faces latérales (3) de certains au moins des segments sont munies d'alésages (41,42) en position prédéterminée. On prévoit des patins d'usure (100) en forme générale de L, vus de côté, la face interne du L étant munie de fixations propres à venir s'engager dans lesdits alésages (41,42), tandis que le pied du L se loge contre un bord longitudinal bas des segments concernés (3).

EP 0 456 537 A1

FIG. 4

L'invention concerne les éléments porte-câbles.

Un tel dispositif comporte des segments articulés, par exemple une chaîne à deux rangées de maillons, interconnectés par des traverses entre lesquelles passent les câbles. Le porte-câbles est habituellement monté entre un point fixe et un chariot mobile, de façon à assurer le maintien et le déplacement convenable des câbles interconnectant ce chariot au sol.

Initialement fabriquées en métal, ces chaînes sont maintenant réalisées en matière synthétique. La chaîne elle-même est assemblée dès la sortie du moule des maillons. Elle est néanmoins démontable et remontable.

Les chaînes antérieures métalliques ne pouvaient pas être utilisées en grande longueur, notamment à cause de leur flexibilité limitée et de leur poids.

Les chaînes en matière synthétique représentent un progrès, puisqu'il est maintenant possible de leur donner une flexibilité supérieure, et par conséquent de les faire venir reposer sur des rails ou sur elles-mêmes, lorsqu'une grande longueur de chaîne est en suspension, comme on le verra plus loin.

Il subsiste néanmoins une certaine usure des chaînes en matière synthétique, lorsqu'elles sont de grande longueur. Cette usure devient un problème majeur lorsque le chariot utilisateur effectue des déplacements fréquents à grande vitesse. La présente invention a pour objet d'apporter une solution à ce problème.

A cet effet, il est proposé un dispositif porte-câbles qui comprend :

      – une série de segments articulés ou maillons, du genre pièces de forme articulées à rotation, à débattement limité, avec des pièces homologues du maillon adjacent, certains au moins des maillons logeant intérieurement des organes porte-câbles tels que des entretoises ou traverses.

Les faces latérales de certains au moins des maillons sont munies d'alésages, en position prédéterminée, par exemple le long de leur axe de symétrie transversal. L'invention prévoit des patins d'usure en forme générale de L, vus de côté, la face interne du L étant munie de tétons propres à venir s'engager dans lesdits alésages, tandis que le pied du L se loge contre un bord longitudinal bas des segments concernés.

D'autres caractéristiques et avantages de l'invention apparaîtront à l'examen de la description détaillée ci-après, et des dessins annexés, sur lesquels :

      – la figure 1 est une vue en perspective représentant deux paires de maillons d'une chaîne porte-câbles en matière synthétique;

      – les figures 2A et 2B illustrent les conditions de travail d'une telle chaine, et la façon dont peut apparaître l'usure; et

      – les figures 3 et 4 illustrent le perfectionnement selon l'invention.

L'objet de l'invention est principalement défini par le dessin. Et les dessins annexés sont de caractère certain. En conséquence, ils sont à considérer comme incorporés à la description, et pourront servir non seulement à mieux faire comprendre celle-ci, mais aussi à définir l'invention, le cas échéant.

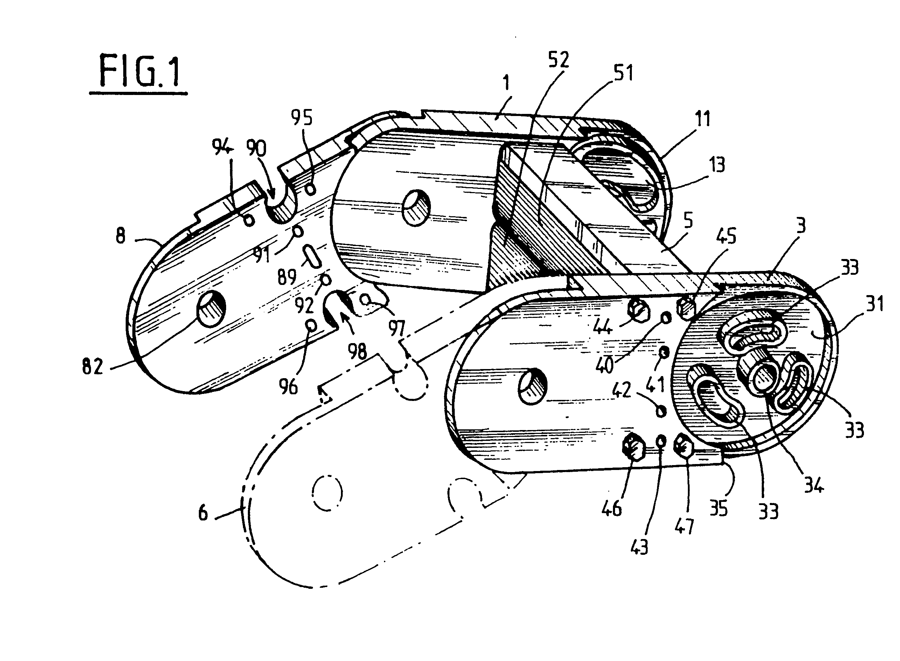

Sur la figure 1, on distingue un couple de maillons impairs 1 et 3, interconnectés par les traverses ou entretoises telles que 5 sur lesquelles est fixé un tampon de caoutchouc 51 rejoignant un autre tampon de caoutchouc 52 fixé sur une traverse homologue de la traverse 5, mais non visible.

D'autres types d'entretoises peuvent être utilisés.

A son extrémité droite, vers l'intérieur, le maillon 1 comporte un évidement cylindrique 11, dont l'axe n'est pas visible, mais où l'on distingue dans une forme en saillie des alvéoles 13 formant limiteur de course.

Ces formes sont destinées à travailler avec les formes homologues d'une autre pièce, formes homologues que l'on retrouve en partie droite dans le maillon 3. L'évidement cylindrique 31 de celui-ci possède un axe 34, et des tétons oblongs 33 en forme de secteurs de cercle, qui peuvent coopérer chacun avec un alvéole tel que 13 pour la limitation de course précitée. En outre, un dégagement est défini en 35 pour permettre le débattement du maillon adjacent par rapport au maillon 3 considéré.

Ceci concerne les maillons 1 et 3 que l'on appellera impairs. Ils coopèrent avec des maillons dits pairs, 6 et 8, dont seul le maillon 8 est illustré en détail pour une meilleure visibilité sur le dessin.

Ce maillon pair 8 comporte des formes semblables et homologues de celles des maillons impairs. On distingue l'axe 82 de sa forme située vers l'arrière à gauche. Dans son axe, le maillon 8 possède des alvéoles 90 et 98 tournées vers ses bords longitudinaux externes qui permettent la fixation d'un autre type d'entretoises.

Toujours dans l'axe, on trouve des perçages 91 et 92, encadrant un perçage central oblong normal aux bords longitudinaux externes et référencé 89. De part et d'autre de l'alvéole 90 sont réalisés des perçages 94 et 95. De part et d'autre de l'alvéole 98 se trouvent des perçages homologues 96 et 97.

Si l'on considère maintenant la face avant du maillon 3, celui-ci fait apparaître aussi des perçages externes 40 et 43, et internes 41 et 42, tous situés selon l'axe transverse du maillon 3, qui est son axe de symétrie perpendiculairement au sens longitudinal.

Des vis 44 et 45 permettent la fixation de l'entretoise ou traverse 5.

Des vis homologues 46 et 47 font de même pour la traverse inférieure qui lui fait face.

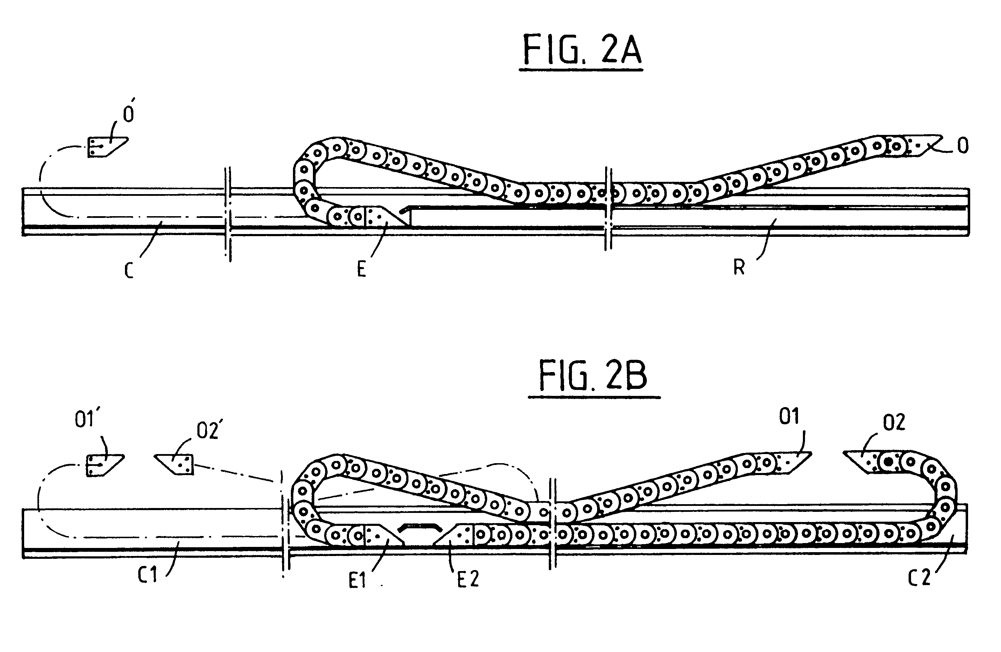

Comme visible sur les figures 2A et 2B, on peut, à partir de cette structure, assembler des chaînes de très grande longueur.

Sur la figure 2A, l'extrémité E de la chaîne est fixée au sol, tandis que son extrémité O est solidaire d'un chariot non représenté. En fonction de la position du chariot, la chaîne va passer de la position illustrée en trait plein à celle schématisée par un trait d'axe, où son origine vient en O'.

Lorsque l'origine de la chaîne est en O, une chaîne plastique va reposer sur un rail R. Lorsqu'elle est en O', elle repose sur le fond C d'un canal prévu à cet effet. Le frottement rencontré ici, entre le métal du rail R et la face longitudinale basse de la chaîne, est de type métal/plastique. Il est générateur d'usure, et ce d'autant plus que la chaîne est de grande longueur.

La chaîne est en polyamide chargée de fibre de verre. Cette usure dégage la fibre de verre, d'où une rugosité importante. Le frottement devient plastique/plastique lorsque O va en O'.

Comme visible sur la figure 2B, certains équipements nécessitent deux chaînes, avec des origines et extrémités respectives O1, E1 ainsi que O2 et E2. Les deux chaînes circulent dans des canaux respectifs C1 et C2, et se déplacent entre la position illustrée en trait plein à droite et celle schématisée en trait d'axe à gauche. On trouve ici des frottements de différents types : métal/plastique entre la chaîne et le canal ou le segment de rail qui apparaît entre les deux extrémités E1 et E2, ou bien plastique/plastique lorsque l'une des chaînes frotte sur l'autre.

Là encore, le risque d'usure est d'autant plus grand que la chaîne est de grande longueur. En outre, la rugosité mentionnée plus haut tend à l'aggraver, lors d'un frottement plastique/plastique.

La Demanderesse a observé que des pièces relativement simples permettaient de diminuer d'une manière considérable les difficultés rencontrées avec les frottements, tout en étant parfaitement compatibles avec la structure de dispositif porte-câble ici décrite.

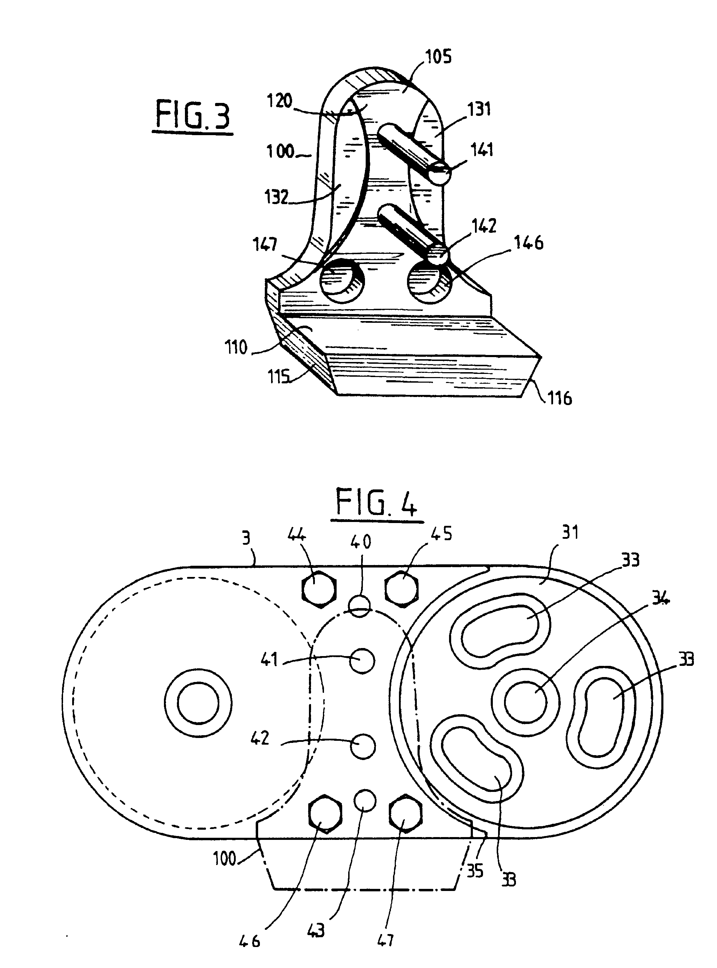

Vue de l'intérieur, la pièce en question est visible sur la figure 3. Elle est désignée dans son ensemble par la référence globale 100, et sa forme générale est celle d'un L, constitué d'une partie verticale 105 et d'une partie horizontale 110. Sur la face interne de la partie verticale 105 sont montés deux tétons 141 et 142, dont l'espacement est tel vis-à-vis du bord bas supérieur 110 que ces tétons puissent s'engager exactement dans les alésages 41 et 42, tandis que le bord 110 vient en appui sur le bord longitudinal bas d'un maillon tel que 3.

En outre, la figure 3 fait apparaître des trous borgnes 146 et 147 destinés à loger respectivement les têtes des vis 46 et 47, et contribuant ainsi au bon maintien de la pièce sur le maillon de chaîne auquel elle est attachée. De plus, la face interne de la partie haute 105 comporte deux méplats rentrants 131 et 132 situés en continuité des alvéoles de forme permettant l'interconnexion du maillon de la chaîne avec le suivant, de façon à faciliter le libre jeu des maillons l'un par rapport à l'autre, sans aucun frottement sur le patin 100.

Les expériences conduites par la Demanderesse ont montré que ce patin améliore considérablement le fonctionnement des chaînes porte-câbles. L'usure est diminuée, et en tous cas supportée par le patin lui-même, qui est très aisément interchangeable, alors que les maillons de la chaîne ne souffrent pas. En outre, la partie verticale du patin améliore le guidage de la chaîne dans son canal.

Dans une réalisation préférentielle, le patin d'usure est réalisé dans un matériau synthétique dépourvu de fibre de verre : polyuréthane, par exemple, ou téflon.

La présente invention peut faire l'objet de nombreuses variantes. La fixation peut être modifiée, dans sa position ou dans son principe (vis par exemple).

En outre une même chaîne peut recevoir différents types d'entretoises, qui viennent soit sur ses maillons pairs, soit sur ses maillons impairs. Le patin se fixe en principe sur tous les maillons, de telle sorte que l'espace libre entre deux pieds de patins 110 soit inférieur à la longueur de ces pieds de patin 110.

En outre, les bords inclinés 115 et 116 sont aménagés pour devenir presque adjacents à la courbure maximale du porte-câbles.

Enfin, un porte-câbles peut être constitué d'une suite de segments monobloc articulés les uns sur le autres. Ils peuvent être en forme de cadres, ou bien constituer une gaîne fermée. Au lieu d'être assurée par alvéoles 13 et tétons 33, la limitation angulaire peut être réalisée par d'autres formes de butée. L'invention s'applique également à ces dispositifs, qui comportent toujours des aléasages utilisables pour la fixation des patins.

## Revendications

1. Dispositif porte-câbles, du type comprenant :
   – une série de segments (1, 3; 6, 8), du genre pièces de forme (1, 3; 6, 8) articulées à rotation à débattement limité avec des pièces homologues de segments adjacents, certains au moins des segments logeant intérieurement des organes porte-câbles (5),
   caractérisé en ce que, les faces latérales (1, 3) de certains au moins des segments étant munies d'alésages (41, 42) en position prédéterminée, sont prévus des patins d'usure (100) en forme générale de L, vus de côté, la face interne du L étant munie de fixations (141, 142) propres à venir s'engager dans lesdits alésages, tandis que le pied du L se loge contre un bord longitudinal bas des segments concernés (3).

2. Dispositif selon la revendication 1, caractérisé en ce que les fixations sont des tétons.

3. Dispositif selon l'une des revendications 1 et 2, caractérisé en ce que la face verticale interne du patin, du côté des tétons, est munie de part et d'autre des méplats en arc de cercle facilitant le libre débattement des segments les uns par rapport aux autres.

4. Dispositif selon l'une des revendications 1 à 3, caractérisé en ce que chaque patin d'usure comprend des trous borgnes (146, 147) destinés à loger des organes tels que des vis débordant latéralement du segment.

5. Dispositif selon l'une des revendications précédentes, caractérisé en ce que la longueur du bord libre inférieur du pied du patin est supérieure à la moitié du pas entre segments.

6. Dispositif selon l'une des revendications précédentes, caractérisé en ce que l'épaisseur du montant du patin est choisie pour améliorer le guidage latéral du dispositif dans son canal.

FIG.1

## FIG. 2A

## FIG. 2B

EP 0 456 537 A1

FIG.3

FIG. 4

EP 0 456 537 A1

Office européen
des brevets

# RAPPORT DE RECHERCHE EUROPEENNE

Numero de la demande

EP 91 40 1007

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 308 958 (CARRIEFLEX KUNSTSTOFFTECHNIK) <br> * figure 5 * <br> --- | 1 | F 16 L 3/01 <br> F 16 G 13/16 |
| A | EP-A-0 277 389 (MAURI) <br> * revendication 1; figure 1 * <br> --- | 1 | |
| A | DE-U-8 614 050 (KABELSCHLEPP) <br> * figure 1 * <br> --- | 1 | |
| A | GB-A-2 106 214 (BICC) <br> ----- | 1 | |

| | | | DOMAINES TECHNIQUES RECHERCHES (Int. Cl.5) |
|---|---|---|---|
| | | | F 16 L <br> F 16 G |

Le présent rapport a été établi pour toutes les revendications

| Lieu de la recherche | Date d'achèvement de la recherche | Examinateur |
|---|---|---|
| BERLIN | 29-05-1991 | SCHAEFFLER C.A.A. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

                                                             
& : membre de la même famille, document correspondant

EPO FORM 1503 03.82 (P0402)

9